Europäisches Patentamt

European Patent Office

Office européen des brevets

(19)

(11) **EP 1 099 094 B1**

(12) **EUROPÄISCHE PATENTSCHRIFT**

(45) Veröffentlichungstag und Bekanntmachung des Hinweises auf die Patenterteilung:
**13.02.2002 Patentblatt 2002/07**

(21) Anmeldenummer: **99948890.1**

(22) Anmeldetag: **29.09.1999**

(51) Int Cl.⁷: $G01C\ 19/56$

(86) Internationale Anmeldenummer:
**PCT/EP99/07205**

(87) Internationale Veröffentlichungsnummer:
**WO 00/19169 (06.04.2000 Gazette 2000/14)**

(54) **MIKROMECHANISCHER DREHRATENSENSOR UND VERFAHREN ZUR HERSTELLUNG**

MICROMECHANICAL ROTATION RATE SENSOR AND METHOD FOR PRODUCING THE SAME

DETECTEUR DE VITESSE DE ROTATION ET PROCEDE PERMETTANT DE LE PRODUIRE

(84) Benannte Vertragsstaaten:
**DE FR GB**

(30) Priorität: **29.09.1998 DE 19844686**

(43) Veröffentlichungstag der Anmeldung:
**16.05.2001 Patentblatt 2001/20**

(73) Patentinhaber: **Fraunhofer-Gesellschaft zur Förderung der angewandten Forschung e.V. 80636 München (DE)**

(72) Erfinder: **SCHMID, Rainer D-81547 München (DE)**

(74) Vertreter: **Schoppe, Fritz, Dipl.-Ing. Patentanwälte Schoppe, Zimmermann, Stöckeler & Zinkler, Postfach 71 08 67 81458 München (DE)**

(56) Entgegenhaltungen:
**WO-A-95/24652**

• **PATENT ABSTRACTS OF JAPAN vol. 1998, no. 14, 31. Dezember 1998 (1998-12-31) & JP 10 242482 A (MITSUBISHI MATERIALS CORP), 11. September 1998 (1998-09-11)**

• **BENITEZ A ET AL: "BULK SILICON MICROELECTROMECHANICAL DEVICES FABRICATED FROM COMMERCIAL BONDED AND ETCHED-BACK SILICON-ON-INSULATOR SUBSTRATES" SENSORS AND ACTUATORS A,CH,ELSEVIER SEQUOIA S.A., LAUSANNE, Bd. A50, Nr. 1/02, 1. August 1995 (1995-08-01), Seiten 99-103, XP000554264 ISSN: 0924-4247 in der Anmeldung erwähnt**

**Beschreibung**

Die vorliegende Erfindung bezieht sich auf Sensoren und insbesondere auf mikromechanische Drehratensensoren und Verfahren zur Herstellung derselben.

Mikromechanische Drehratensensoren sind seit längerem bekannt. Sie bestehen aus einer oder mehreren mikromechanisch strukturierten seismischen Schwingmassen, die einer gesteuerten periodischen Bewegung (Anregungsbewegung) in einer Ebene (Anregungsschwingungsebene) unterworfen sind. Diese seismischen Schwingmassen sind derart strukturiert und befestigt, daß sie oder Teile derselben in einer Ebene senkrecht zur Anregungsschwingungsebene ebenfalls beweglich aufgehängt sind. Diese Ebene wird als Detektionsebene bestimmt. Dieselben umfassen ferner eine Detektionseinheit, die eine Auslenkung der Schwingmasse bzw. der Schwingmassen oder Teilen derselben in der Detektionsebene aufnimmt.

Die Auslenkung in der Detektionsebene kommt entweder aufgrund der Corioliskiaft $F_C$ auf die bewegten Schwingmassen bei Linearschwingern zustande, oder aufgrund der Drehimpulserhaltung bei Rotationsschwingern. In die Auslenkung geht die Rotationsgeschwindigkeit $\Omega$, die auch als Drehrate bezeichnet wird, und die Geschwindigkeit der Anregungsbewegung ($v$ oder $\omega$) ein. Die Auslenkung ist senkrecht zur ursprünglichen Anregungsbewegung gerichtet. Die Erfassungs- oder Detektionseinheit kann somit das Aufzeichnen der Bewegung in der Detektionsebene auf eine Rotationsgeschwindigkeit bzw. Drehrate des Sensors zurückführen:

$$F_C = 2mv \times \Omega$$

$$M = \Theta\omega \times \Omega$$

Die Besonderheit von Sensoren zur Erfassung von Drehraten beispielsweise gegenüber Beschleunigungssensoren liegt in dem Erfordernis einer Anregungsbewegung der seismischen Schwingmassen, was bei Beschleunigungssensoren selbstverständlich nicht nötig ist. Die Drehrate kann nur indirekt über die Geschwindigkeit bzw. Rotationsgeschwindigkeit der zusätzlichen Anregungsbewegung gemessen werden, welche aber keinen weiteren Einfluß auf die Erfassung haben sollte. Dies erfordert eine große Anzahl von Bewegungsfreiheitsgraden der Anordnung.

Verschiedene Herstellungstechniken und deren Randbedingungen schränken die Realisierungsmöglichkeiten der Strukturen ein, so daß die Anordnung auf die verwendete Herstellungstechnologie abgestimmt werden muß. Die Herstellungstechnologie muß daher kompatibel zur komplexen Struktur des gesamten Drehratensensors sein.

Im Stand der Technik sind verschiedene Realisierungsprinzipien in Verbindung mit unterschiedlichen Herstellungstechniken bekannt.

So zeigt die DE 195 00 800 Drehratensensoren, welche zwei linear gegeneinander schwingende Massen aufweisen. Die Massen sind dabei aus einem auf ein Substrat epitaktisch aufgewachsenen Polysilizium herausstrukturiert.

Die DE 195 23 895 zeigt Drehratensensoren als Rotationsschwinger, welche die Drehimpulserhaltung ausnutzen. Dieselben werden auf ähnliche Art und Weise, wie sie in der DE 195 00 800 beschrieben ist, hergestellt.

Die DE 195 28 961 zeigt Drehratensensoren in Form einer Stimmgabel, wobei die beiden Zinken aus unterschiedlichen Wafern strukturiert und anschließend zum Sensor zusammengesetzt werden.

Die WO 98/15799 offenbart Drehratensensoren mit entkoppelten orthogonalen Primär- und Sekundärschwingern, die mittels mikromechanischer Prozesse, Oberflächenmikromechaniktechnologien oder auf ähnliche Art und Weise, wie sie in der DE 195 00 800 beschrieben ist, hergestellt werden können.

Die bekannten Herstellungsverfahren weisen eine Reihe von Nachteilen auf. Wenn die Oberflächenmikromechanik zur Strukturierung der schwingenden Massen, der Biegebalken und Torsionsfedern und der Aufhängungen auf aufgewachsenes Polysilizium angewendet wird, entstehen Spannungen im mikromechanischen Element, welche durch das epitaktisch aufgewachsene Polysilizium bewirkt werden. Diese Spannungen führen zu einem veränderten mechanischen Verhalten.

Epitaktisch aufgewachsenes Polysilizium kann ferner nur bis zu einer bestimmten Höhe hergestellt werden, wodurch das Sensorelement auf eine bestimmte Höhe begrenzt ist. Damit besteht keine ausreichende Freiheit zur Bestimmung eines optimalen Aspektverhältnisses von Strukturen, was sich nachteilig auf die Dimensionierung, das Sensorauflösungsvermögen und die Störempfindlichkeit des mikromechanischen Drehratensensors auswirken kann.

Epitaktisch aufgewachsenes Polysilizium ist ferner Alterungsprozessen vor allem bei ständiger mechanischer Belastung unterworfen, wodurch sich die Eigenschaften des mikromechanischen Drehratensensors über der Zeit nachteilig verändern können. Ein solcher mikromechanischer Drehratensensor altert.

Die DE 195 28 961 offenbart zur Herstellung von Drehratensensoren in Form einer Stimmgabel, daß die Schwingmassen des Drehratensensors aus mehreren in Bulk-Mikromechanik vorprozessierten SOI-Wafern hergestellt werden und anschließend zu Sensoren verbunden werden. Ein wesentlicher Nachteil dieses Verfahrens besteht in der unzureichend genauen Justierung der zinken der Gabel gegeneinander, und dem hohen Aufwand zum Abgleich der mechanischen Eigenschaften. Ein weiterer Nachteil besteht in der Benutzung von Bulk-Mikromechaniktechnologien zur Strukturierung der Zinken, wodurch die Möglichkeiten zur Dimensionierung der Strukturen stark eingeschränkt sind.

Die DE 195 26 903 A1 offenbart einen Drehratensensor, der aus einem mehrschichtigen Substrat, das eine untere Siliziumschicht und eine obere Siliziumschicht aufweist, gebildet ist. Zwischen den beiden Siliziumschichten befindet sich eine isolierende Opferschicht. Die untere Siliziumschicht ist als Siliziumwafer ausgeführt, auf dem als Opferschicht eine Siliziumoxidschicht, eine Siliziumnitridschicht oder Glas aufgebracht ist. Die obere Siliziumschicht wird durch Abscheiden aus einem Plasma oder durch Bonden eines weiteren Siliziumwafers mit der Opferschicht erzeugt. Die obere Siliziumschicht kann polykristallines, einkristallines oder eine Mischung eines poly- und einkristallinen Siliziummaterials aufweisen.

Die Fachveröffentlichung von A. Benitez, u.a. mit dem Titel "Bulk Silicon Microelectromechanical Devices Fabricated from Commercial Bonded and Etched-Back Silicon-on-Insulator Substrates", Sensors and Actuators, A 50 (1995), S. 99-103 offenbart sogenannte BESOI-Substrate. BESOI steht für "bonded and etched-back silicon-on-insulator". Ein BESOI-Substrat wird folgendermaßen hergestellt. Ein Ausgangssubstrat aus Silizium wird mit einer Zwischonsiliziumdioxidschicht versehen. Auf diese Zwischensiliziumdioxidschicht wird ein weiterer Siliziumwafer mittels Waferbonden oder mittels Waferfusion aufgebracht, woraufhin einer der beiden Siliziumwafer auf die gewünschte Dicke rückgeätzt wird. Die zwischen den beiden Wafern vorhandene Siliziumdioxidschicht kann als Opferschicht verwendet werden, um elektrostatische Mikromotoren, Mikroturbinen und elektrostatisch betätigte Mikrorelais herzustellen.

Das Patent Abstract of Japan, Bd. 1998, Nr. 14 offenbart ein Verfahren zur Herstellung eines Halbleiterträgheitssensors. Hierzu wird ein zweiter Siliziumwafer an einem ersten Siliziumwafer angebracht und geschliffen, um eine Einkristall-Siliziumschicht zu bilden, die dann auf einer Glasabstandshalterschicht anodisch gebondet wird.

Die Aufgabe der vorliegenden Erfindung besteht darin, ein Konzept für preisgünstig herstellbare mikromechanische Drehratensensoren zu schaffen, das zusätzlich eine große Entwurfsfreiheit ermöglicht.

Diese Aufgabe wird durch einen mikromechanischen Drehratensensor gemäß Anspruch 1 und durch ein Verfahren zum Herstellen eines mikromechanischen Drehratensensors gemäß Anspruch 14 gelöst.

Ein Vorteil der vorliegenden Erfindung besteht darin, daß sie mikromechanische Drehratensensoren aus geeignetem Material liefert, bei denen eine sehr große Entwurfsfreiheit existiert, ohne daß die Strukturen abgeglichen werden müssen.

Der vorliegenden Erfindung liegt die Erkenntnis zugrunde, daß von dem Konzept des einstückigen Drehratensensors, der aus einem einzigen Wafer mit epitaktisch aufgewachsenem Polysilizium oder mit einer SOI-Struktur hergestellt ist, weggegangen werden muß, um eine optimale Entwurfsfreiheit und eine preisgünstige Herstellbarkeit zu erreichen. Ein erfindungsgemäßer mikromechanischer Drehratensensor umfaßt daher eine Substratwaferanordnung, eine Strukturwaferanordnung, in der wenigstens eine seismische Masse, deren Aufhängung und mindestens eine Federeinrichtung zum Verbinden der Aufhängung mit der seismischen Masse definiert sind, und eine isolierende Verbindungsschicht, die die Substratwaferanordnung mit der Strukturwaferanordnung mechanisch verbindet, derart, daß die seismische Masse eine Anregungsschwingung, und die seismische Masse oder Teile davon eine Erfassungsschwingung aufgrund einer Drehrate relativ zu der Substratwaferanordnung ausführen kann.

Der erfindungsgemäße mikromechanische Drehratensensor basiert somit auf einer Waferstapelanordnung, wodurch es möglich ist, die Waferanordnung für das Substrat und für den Drehratensensor, sowie dessen Materialien völlig unabhängig voneinander zu wählen, und wodurch zusätzlich die Möglichkeit gegeben ist, die Wafer vor der Verbindung teilweise vorzuprozessieren. Im Gegensatz zu SOI-Substraten oder Substraten mit aufgewachsenem Polysilizium ist die Dicke der Strukturschicht, d. h. der Federn, der seismischen Massen usw., völlig frei wählbar, indem einfach ein Wafer mit erwünschter Dicke ausgewählt wird und mittels der Verbindungsschicht, die aus einem Polymer oder einem anderen organischen Material sein kann, auf die Substratwaferanordnung geklebt wird, oder ein Strukturwafer über die Verbindungsschicht mit dem Substratwafer verbunden wird, der anschließend auf die gewünschte Höhe eingestellt wird. Die Verbindungsschicht hat ferner den Vorteil, daß sie als Ätzstoppschicht für die Strukturierung und als Opferschicht, um freistehende Strukturen zu erhalten, verwendet werden kann.

Gemäß einem bevorzugten Ausführungsbeispiel mit kapazitiver Erfassung der Bewegung der seismischen Masse aufgrund der Corioliskraft umfaßt die Substratwaferanordnung eine Metallisierung, die strukturiert ist, um zumindest die Erfassungselektroden aufzuweisen. Die Metallisierung kann ohne Probleme auf einen Halbleiterwafer aufgebracht werden, bevor der metallisierte Wafer über die verbindungsschicht mit dem Strukturwafer verbunden wird. Damit ist es möglich, die Komplexität der Anordnung zu verringern, da nicht darauf geachtet werden muß, daß alle Elektroden oben auf der Struktur sind, wie es beispielsweise bei SOI-Drehratensensoren der Fall sein kann.

Die Schicht- bzw. Waferstapelanordnung führt zu einer Anordnung, die optimal ist für die Benutzung von geeignetem Material, die Strukturierung der Elemente und die Plazierung, Dimensionierung und Aufbringung der Strukturen sowie die Verwendung von geeigneten Anregungs- und Detektionseinheiten. Die Waferstapelanordnung erlaubt größtmögliche Freiheit bezüglich einer Gestaltung der Drehratensensoren und unterschiedlichen Erfassungseinheiten. Die Anregungsschwingung kann dabei durch verschiedene Methoden angeregt werden, wie z. B. piezoelektrische, elektrostatische, elektromagnetische, elektrothermische, induktive oder thermomechanische Methoden. Die Erfassung des Meßeffekts kann ebenfalls durch verschiedene Detektionseinheiten realisiert werden, von denen z. B. die piezoresistiven, die kapazitiven, die induktiven, die optischen, die piezoelektrischen und die thermomechanischen zu nennen sind. Bei Drehraten mit verschiedenen Anregungs- und Erfassungseinheiten kann die Anregungsschwingung als Linearschwingung, als Rotationsschwingung oder als Torsion realisiert sein. Ebenso kann für die Erfassung eine lineare Auslenkung bzw. Schwingung, eine Rotationsschwingung oder eine Torsion genutzt werden.

Bevorzugte Ausführungsbeispiele der vorliegenden Erfindung werden nachfolgend bezugnehmend auf die beiliegenden Zeichnungen detaillierter erläutert. Es zeigen:

Fig. 1 eine perspektivische Ansicht eines erfindungsgemäßen Drehratensensors;

Fig. 2 eine Darstellung zur Verdeutlichung der Herstellung eines erfindungsgemäßen Drehratensensors;

Fig. 3 eine Querschnittsansicht eines erfindungsgemäßen Drehratensensors mit vergrabenen Elektroden;

Fig. 4 eine Querschnittsansicht eines erfindungsgemäßen Drehratensensors mit monolithisch integrierter Schaltung;

Fig. 5 eine Draufsicht auf die Strukturwaferanordnung eines erfindungsgemäßen Drehratensensors;

Fig. 6 eine Draufsicht auf die Strukturwaferanordnung eines anderen erfindungsgemäßen Drehratensensors;

Fig. 7 eine Querschnittsansicht eines Teils eines erfindungsgemäßen Drehratensensors zur Darstellung einer Metallisierungsverbindung;

Fig. 8 eine Querschnittsansicht eines erfindungsgemäßen Drehratensensors zur Darstellung einer alternativen Metallisierungsverbindung;

Fig. 9 eine Draufsicht auf die Strukturwaferanordnung eines weiteren Drehratensensors, der gemäß der vorliegenden Erfindung hergestellt werden kann; und

Fig. 10. eine Querschnittsansicht eines erfindungsgemäßen Drehratensensors mit einem Dekkelwafer.

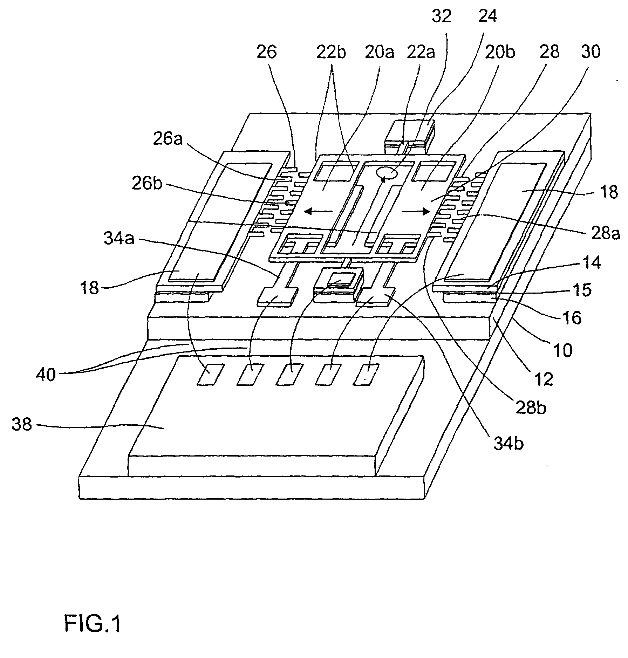

In Fig. 1 ist ein erfindungsgemäßer Drehratensensor gezeigt, der auf einem Schaltungssubstrat 10, das aus Keramik bestehen kann, aufgebracht ist. Der Drehratensensor umfaßt eine Substratwaferanordnung 12 und eine Strukturwaferanordnung 14, die mittels einer Verbindungsschicht 15 verbunden sind, wobei die Substratwaferanordnung ferner eine optionale Metallisierung 16 umfaßt, während die Strukturwaferanordnung eine ebenfalls optionale Metallisierung 18 aufweist. Der mikromechanische Drehratensensor umfaßt ferner zwei linear gegeneinander schwingende seismische Massen 20a, 20b, die über eine Federeinrichtung, die einen Torsionsbalken 22a sowie Biegebalken 22b aufweist, mit einer Aufhängung 24 verbunden sind. Die beiden seismischen Massen werden mittels zweier gegenphasig betriebener elektrostatischer Antriebseinheiten 26 und 28 in eine gegenphasige Schwingung versetzt, wie es durch die Pfeile 30 angedeutet ist. Jede elektrostatische Kammantriebseinrichtung 26 und 28 umfaßt einen feststehenden Abschnitt 26a bzw. 28a sowie einen beweglichen Abschnitt 26b bzw. 28b, wobei die beweglichen Abschnitte jeweils mit einer seismischen Masse 20a bzw. 20b verbunden sind.

Wenn der in Fig. 1 gezeigte mikromechanische Drehratensensor um eine Achse, die parallel zu seiner Längsrichtung ist, in Drehung versetzt wird, wie es durch den Pfeil 32 angedeutet ist, führen die seismischen Massen 20a und 20b aufgrund ihrer gegenphasigen Anregung eine gegenphasige Auslenkung aufgrund der Corioliskraft durch, die mittels Erfassungselektroden 34a, 34b erfaßbar ist. Da die linke seismische Masse 20a von der Substratwaferanordnung 12 durch die Corioliskraft weggezogen wird, wenn die rechte seismische Masse 20b zur Substratwaferanordnung hingezogen wird, bilden die beiden Elektroden 34a, 34b eine Differenzkapazitätserfassung, die von einem ASIC-Baustein 38 über Bonddrähte 40 erfaßt und ausgewertet wird.

Neben den Bonddrähten für die beiden Erfassungselektroden 34a, 34b existieren weitere Bonddrähte zu der der Aufhängung 24 gegenüberliegenden Aufhängung und zu den feststehenden Teilen 28a, 26a der Kammantriebe. Vorzugsweise ist die Anordnung, die aus der seismischen Masse, den Torsionsbalken und der Aufhängung besteht, auf Masse gelegt, derart, daß sowohl für die Anregung als auch für die Erfassung ein festes Referenzpotential vorhanden ist. Die feststehenden Teile der Kammantriebe 28a, 26a werden mit entsprechenden Wechseispannungen beaufschlagt, die über mit der Metallisierung 18 verbundene Bonddrähte von der integrierten Schaltung 38 zugeführt wird.

Fig. 1 zeigt somit einen Drehratensensor als Linearschwinger in Schicht- bzw. Waferstapelanordnung mit zwei gegenphasig schwingenden seismischen Massen 20a, 20b, der hybrid integriert ist, d. h. bei dem eine vorgefertigte ASIC-Schaltung zur Anregung und Detektion bzw. Auswertung verwendet wird. Alternativ zu dem in Fig. 1 gezeigten Ausführungsbeispiel kann statt der beiden Aufhängungen 24 lediglich eine Aufhängung in der Mitte vorgesehen sein, um die seismischen Massen gegenüber der Substratwaferanordnung 12 beweglich zu halten. Alternativ könnte statt den Erfassungselektroden, die eine kapazitive Erfassung durchführen, auch eine piezoresistive Erfassung in Form von implantierten Widerständen in den Torsionsbalken 22a vorgesehen sein. Dann würde die Metallisierung der Substratwaferanordnung 12 nicht benötigt. In diesem Fall würde es ausreichen, lediglich als Substratwaferanordnung 12 einen Halbleiterwafer zu nehmen, auf den über die Verbindungsschicht 14 als Strukturwaferanordnung ebenfalls ein Halbleiter mit Metallisierung aufgebracht ist. Auf die Metallisierung 18 der Strukturwaferanordnung kann ebenfalls verzichtet werden, wenn ein entsprechendes Anregungs- oder Erfassungsverfahren verwendet wird, das ohne eine solche Metallisierung auskommt.

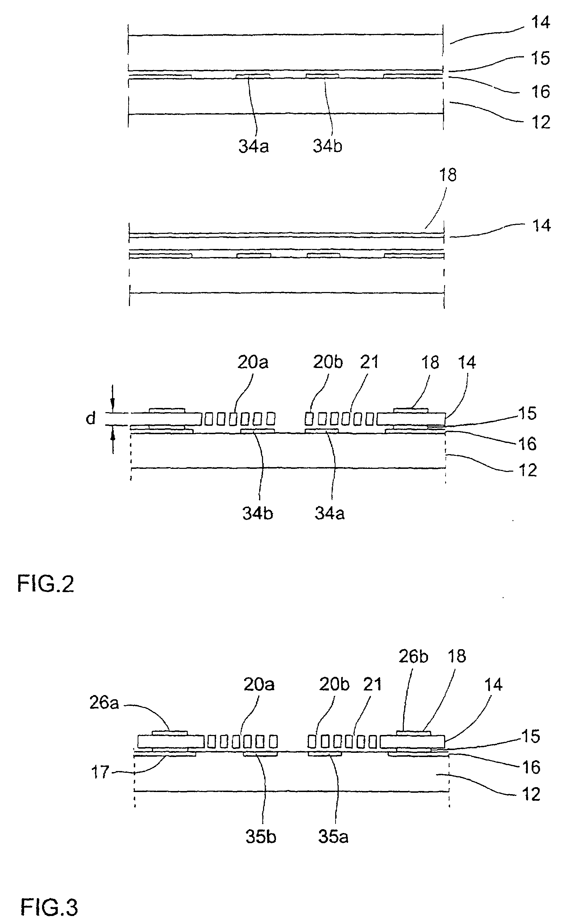

Fig. 2 zeigt einen Abschnitt der Herstellung des erfindungsgemäßen mikromechanischen Drehratensensors. In der obersten Zeichnung von Fig. 2 ist eine Substratwaferanordnung gezeigt, die einen Substratwafer 12 und eine darauf gebildete und strukturierbare Metallisierung 16 aufweist. Die Substratwaferanordnung 12, 16 ist über die Verbindungsschicht 15 mit dem Strukturwafer 14 verbunden. In der zweiten Zeichnung von Fig. 2 ist zu sehen, daß der Strukturwafer ebenfalls um eine Metallisierung 18 ergänzt werden kann, um eine Strukturwaferanordnung 14, 18 zu bilden. Zunächst wird ein Substratwafer 12 genommen und mit der Metallisierung 16 versehen, aus der dann durch geeignete Strukturierung beispielsweise die Erfassungselektroden 34a, 34b strukturiert werden. Über die Substratwaferanordnung, die den Substratwafer 12 und die Metallisierung 16 aufweist, wird dann die Verbindungsschicht 15 aufgebracht, woraufhin die Strukturwaferanordnung 14, 18 auf die Verbindungsschicht 15 aufgesetzt wird, damit dieselben mechanisch verbunden, beispielsweise verklebt, werden. Vor dem Aufbringen der Metallisierung 18 kann der Strukturwafer gedünnt werden.

Daran anschließend wird, wie es im unteren Bild von Fig. 2 gezeigt ist, die Strukturwaferanordnung 14, 18 behandelt, derart, daß die optionale Metallisierung 18 durch bekannte Techniken definiert wird, um Anschlußflächen für den feststehenden Teil 28a bzw. 26a zu bilden. Dann wird mittels eines Strukturierungsschritts, der vorzugsweise als Trockenätzung ausgeführt wird, die Strukturschicht strukturiert. Somit werden die seismischen Massen 20a, 20b und die entsprechenden Biegebalken, Torsionsbalken, usw. hergestellt.

Für diesen Trockenätzschritt wirkt die Verbindungsschicht 15 als Ätzstopp. Die Verbindungsschicht 15 unter den Komponenten, die frei beweglich sein sollen, dient als Opferschicht und wird in einem anschließenden weiteren Trockenätzschritt entfernt.

Um die Verbindungsschicht 15 unter den üblicherweise flächigen seismischen Massen zu entfernen, werden in dieselben Durchbrüche 21 eingebracht. Diese Durchbrüche 21 werden ebenfalls während des Schritts des Strukturierens gebildet. Mittels eines selektiven Trockenätzverfahrens, das lediglich die Verbindungsschicht 15 ätzt, und das weder Metalimaterialien noch Wafermaterialien angreift, wird die Opferschicht entfernt. Wie es aus der unteren Zeichnung von Fig. 2 zu sehen ist, muß dieses Ätzverfahren bei Verwendung flächiger seismischer Massen ebenfalls eine gewisse laterale Ätzrate haben, derart, daß die seismischen Massen freihängend werden. Werden jedoch keine flächigen Massen eingesetzt, sondern eher stabförmige Massen, so kann auf die Durchbrüche 21 verzichtet werden. In diesem Fall wird die laterale Ätzrate ausreichen, um eher schmale Massen freihängend zu bekommen.

Als Material sowohl für den Substratwafer 12 als auch den Strukturwafer 14 wird vorzugsweise einkristallines Silizium verwendet. Vorzugsweise wird, bevor die Metallisierung 18 auf den Strukturwafer aufgebracht wird, derselbe bis zu einer gewissen Dicke d gedünnt. Erst anschließend wird die Strukturierung durchgeführt. Zum Abdünnen des Wafers können in der Technik bekannte Verfahren verwendet werden. Dieselben bieten einerseits den Vorteil einer preisgünstigen Ausführung und andererseits den Vorteil, daß im wesentlichen alle Elemente des Drehratensensors, die durch die Strukturschicht definiert sind, die gleiche Dicke d haben. Dies macht einen mechanischen Abgleich von Schwingstrukturen nach der Herstellung beispielsweise mittels Laserablation oder ähnlichem unnötig. Die in Fig. 2 gezeigte Anordnung bietet sich speziell für die erfindungsgemäßen Drehratensensoren an, da die Dicke bzw. Höhe d des Strukturwafers 14 nahezu beliebig und daher auch nahezu beliebig groß eingestellt werden kann, wodurch eine große und damit auch schwere Schwingmasse erhalten wird, die eine höhere Sensorempfindlichkeit liefert. Desweiteren wird der Sensor mit einer hohen Höhe h störunempfindlicher gegenüber Beschleunigungen senkrecht zu der Waferstapelanordnung und unterdrückt gleichzeitig stärker Levitationseffekte. Neben der erreichbaren großen Höhe d bietet auch einkristallines Silizium bessere Empfindlichkeiten, bessere Langzeitstabilitäten und bessere Dimensionierungsmöglichkeiten.

Fig. 3 zeigt eine zu Fig. 2 ähnliche Anordnung, in der jedoch keine Elektroden 34a, 34b in Form einer Metallisierung des Substratwafers 12 gebildet sind, sondern bei der implantierte Elektroden 35a, 35b gebildet sind. Als Alternative kann der Substratwafer mit Vertiefungen versehen werden, wobei die Metallisierung in diesen Vertiefungen die Elektroden bilden.

Die vergrabenen Elektroden können beispielsweise mittels Implantierens des Substratwafers 12 an den entsprechenden Stellen hergestellt werden. Wie es aus den Fig. 2 und 3 zu sehen ist, befindet sich unter dem feststehenden Teil 26a bzw. 26b ebenfalls eine Metallisierungsschicht 16 (Fig. 2) bzw. 17 (implantierte Schicht mit niedrigem Widerstand, Fig. 3). Dies bedeutet, daß der Substratwafer 12 über die Metallisierungsschicht 16 bzw. 17 mit der Verbindungsschicht 15 und dann mit dem Strukturwafer verbunden ist. Diese Metallisierungsschicht an den Verbindungsstellen ist nicht zwingend erforderlich.

Da jedoch erfindungsgemäß eine Waferstapelanordnung verwendet wird, wobei zunächst der Substratwafer metallisiert wird, um eine Substratwaferanordnung zu bilden, woraufhin die Metallisierung geeignet strukturiert wird, können viele einzelnen Drehratensensoren auf einem "Mutterwafer" strukturiert werden. Es ist nicht erforderlich, an den Grenzbereichen der einzelnen Drehratensensoren die angesprochene Metallisierung zu entfernen. Sie könnte jedoch entfernt werden, wenn es erforderlich ist, bzw. eine minimale Höhe der seismischen Massen über dem Substratwafer 12 erforderlich ist, bzw. wenn eine dickere Verbindungsschicht 15 aufgebracht werden soll. Nachdem ein Mutterwafer für die Substratwaferanordnung und ein Mutterwafer für die Strukturwaferanordnung über die Verbindungsschicht verbunden worden sind, und nachdem die Strukturierung und Opferschichtätzung stattgefunden hat, wird die "Mutterwaferstapelanordnung" zerteilt, um die einzelnen mikromechanischen Drehratensensoren zu erhalten, die dann auf das Grundsubstrat 10 aufgeklebt werden und an die integrierte Schaltung 38 angeschlossen werden.

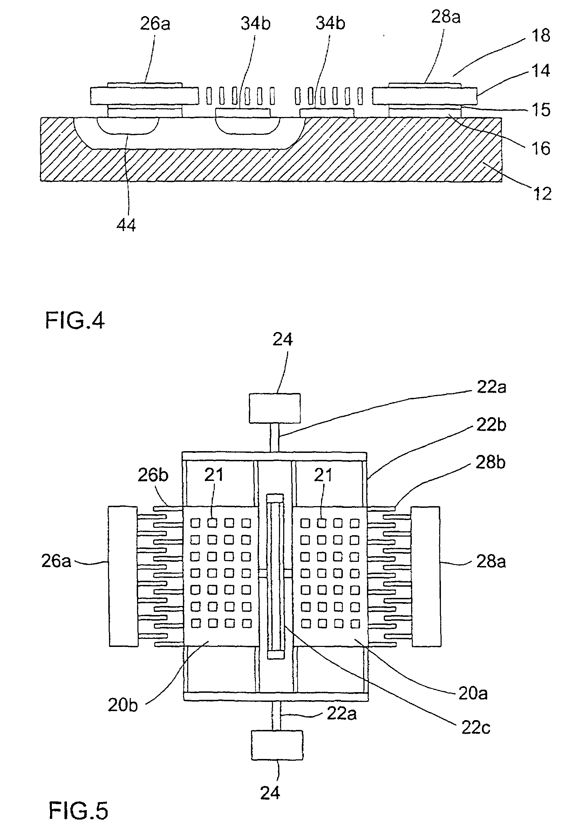

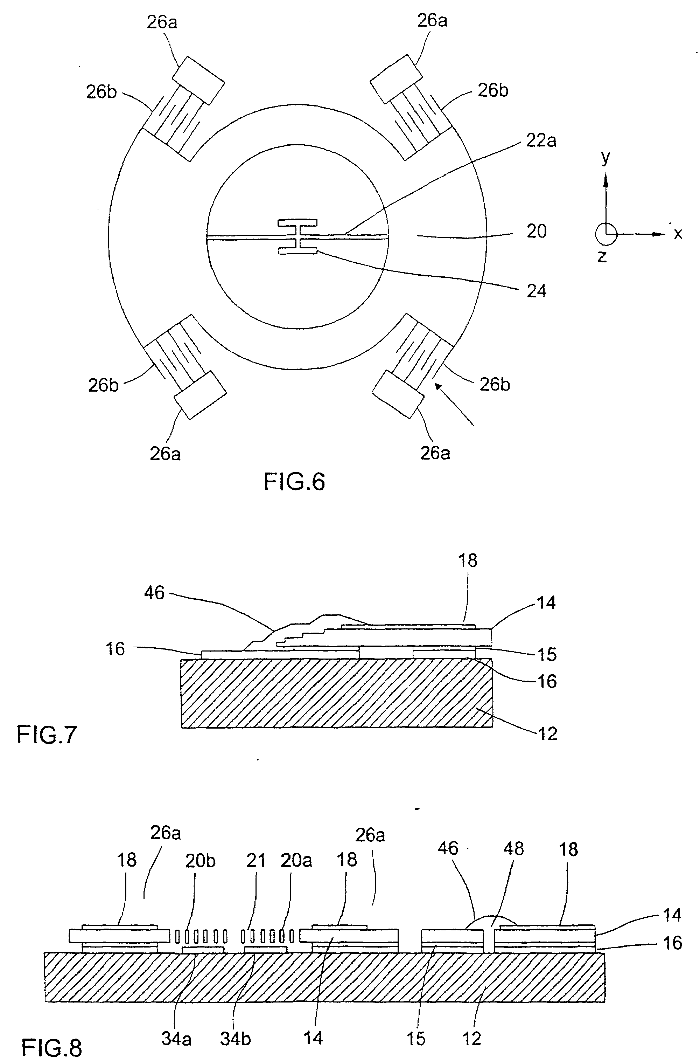

Fig. 4 zeigt ein alternatives Ausführungsbeispiel bezüglich Fig. 3, bei dem eine integrierte Schaltung 44 in die Substratwaferanordnung monolithisch integriert ist. Bei diesem Ausführungsbeispiel kann auf die Bonddrähte 40 verzichtet werden. Die Elektroden 34a, 34b können direkt mit einer darunter oder daneben in den Substratwafer integrierten Schaltungsanordnung verbunden werden, während die Metallisierungen 18 der feststehenden Kammantriebseinrichtungen 26a, 28a noch nach unten mit der Metallisierung der Substratwaferanordnung verbunden werden müssen, wie es durch die Fig. 7 und 8, welche später erläutert werden, angedeutet ist.

Fig. 5 zeigt ein weiteres Beispiel für die Strukturwaferanordnung nach der Strukturierung eines erfindungsgemäßen Drehratensensors. Im Unterschied zu dem in Fig. 1 gezeigten Drehratensensor umfaßt der in Fig. 5 gezeigte Drehratensensor, von dem lediglich die strukturierte Strukturwaferanordnung dargestellt ist, weitere Biegebalken 22c, die die seismischen Massen 20a, 20b verbinden. Der in Fig. 5 gezeigte Linearschwinger, der aus zwei seismischen Massen besteht, die über den Verbindungsbalken 22c gekoppelt sind, zeigt eine hervorragende Trennung der Schwingungsmoden. Durch die Kopplung 22c haben die gleichphasige und die gegenphasige Schwingung der seismischen Massen unterschiedliche Resonanzfrequenzen. Die großen seismischen Massen 20a, 20b umfassen die mit 21 gekennzeichneten Durchbrüche zur Opferschichtätzung. Durch eine beliebige Höhenvariationsmöglichkeit (d, Fig. 2) kann allein durch die Höhe Einfluß auf die Torsionsbalken 22a genommen werden, während die Höhe hier keinen Einfluß auf die Biegebalken 22b hat, derart, daß allein durch die Einstellung der Höhe die Resonanzfrequenzen aufeinander abgestimmt werden können.

Fig. 6 zeigt einen Drehratensensor gemäß einem weiteren Ausführungsbeispiel der vorliegenden Erfindung, der lediglich eine einzige seismische Masse 20 aufweist, die kreisförmig ist und über Biegebalken 22a mit der Aufhängung 24 verbunden ist. Entsprechende Kammantriebe 26, die jeweils einen feststehenden Teil 26a und einen mit der seismischen Masse 20 verbundenen beweglichen Teil 26b haben, werden geeignet angesteuert, um eine kreisförmige Anregungsschwingung in der Zeichenebene auszuführen. Der in Fig. 6 gezeigte Rotationsschwinger nutzt die Torsion des Schwingers 20 um die Achse x herum sowie die um die y-Achse zur Erfassung von zwei senkrecht aufeinanderstehenden Drehraten. Die Aufhängung 24 ist in der Mitte der seismischen Masse 20 an nur einer Stelle vorgesehen. Die in Richtung der y-Achse gerichtete Drehrate führt zu einer Torsion der seismischen Masse 20 um die x-Achse, während die parallel zur x-Achse gerichtete Drehrate zu einer Verbiegung um die y-Achse der seismischen Masse 20 führt. Die Anregungsschwingung, die durch die Kammantriebe 26 geschaffen wird, findet um die z-Achse herum statt.

Die Fig. 7 und 8 zeigen zwei unterschiedliche Möglichkeiten, wie eine Metallisierungsverbindung von der Substratwaferanordnung, die aus dem Substratwafer 12 und der Metallisierung 16 besteht, zu der Strukturwaferanordnung, die aus dem Strukturwafer 14 und der Metallisierung 18 besteht, erhalten werden kann. In Fig. 7 wird eine Metallisierungsverbindung 46 zum Substratwafer 14 hergestellt, bei der der Strukturwafer entfernt ist. In Fig. 8 wird dagegen während der Strukturierung der Strukturschicht ebenfalls ein Fenster oder Loch 48 in den Strukturwafer 14 eingebracht, das dann durch die Verbindungsmetallisierung 46 aufgefüllt wird, um die Metallisierungsebene 16 mit der Metallisierungsebene 18 zu verbinden. Dies hat bezugnehmend auf Fig. 1 den Vorteil, daß alle Bondanschlußflächen des Drehratensensors auf eine Höhe, beispielsweise auf die Höhe der Metallisierung der Substratwaferanordnung, gelegt werden können, um die Bondoperationen zu vereinfachen und damit zuverlässiger zu machen. Alternativ kann unter Verwendung von vergrabenen Elektroden (35a, 35b, Fig. 3) in Verbindung mit einer integrierten Schaltung 44 (Fig. 4) eine Verbindung mittels Leiterbahnen mit den zu kontaktierenden Stellen zu der integrierten Schaltung 44 hergestellt werden, wobei die Schaltung 44 monolithisch in den Substratwafer 12 der Substratwaferanordnung integriert ist.

Obwohl es in den Figuren nicht gezeigt ist, können beliebige Drehratensensorstrukturen hergestellt werden, welche zumindest eine seismische Masse, die als Linear- oder Rotationsschwinger ausgeführt sein kann, aufweisen können. Weiterhin kann jede Art von Biegebalken, wie z. B. gefaltete Biegebalken, verwendet werden, um eine Anregungsschwingung mit höherer Amplitude und höherer Geschwindigkeit zur Erhöhung der Meßempfindlichkeit zu erhalten.

Desweiteren können Drehratensensorstrukturen hergestellt werden, die gleichzeitig zwei senkrecht zueinander stehende Drehraten detektieren können, und es können Drehratensensorstrukturen hergestellt werden, wobei die Detektion der Drehrate in der Strukturwaferebene erfolgt, so daß auf die Metallisierung der Substratwaferanordnung verzichtet werden kann.

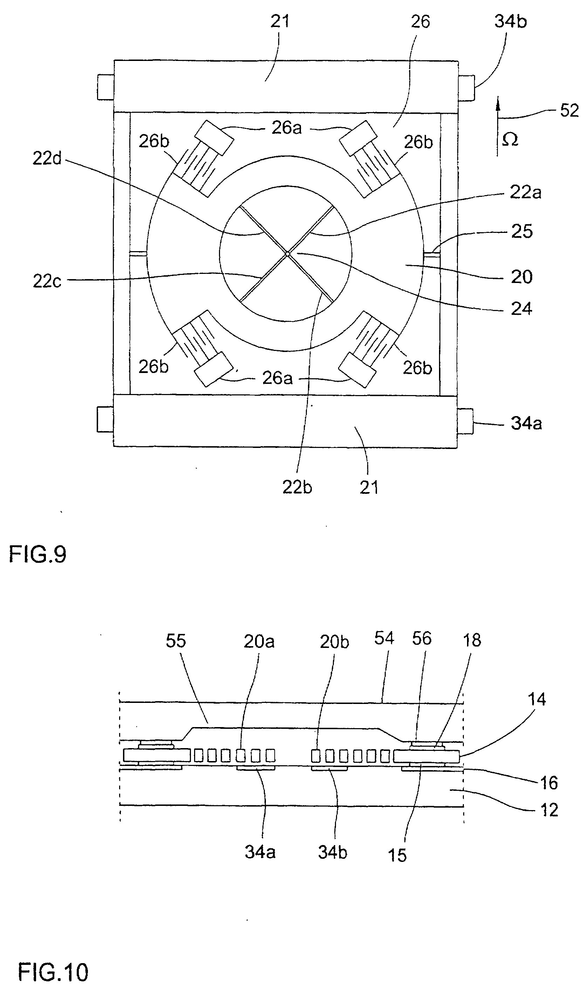

Fig. 9 zeigt einen Drehratensensor gemäß einem weiteren Ausführungsbeispiel der vorliegenden Erfindung, der eine seismische Masse 20 aufweist, die über vier Kammantriebe 26, die jeweils einen feststehenden Teil 26a und einen beweglichen Teil 26b aufweisen, in Rotationsschwingung versetzt wird. Die Schwingung ist um die Aufhängung 24 herum gerichtet, welche mittels vier Torsionsbalken 22a bis 22d mit der seismischen Masse 20 verbunden ist.

Im Gegensatz zu dem in Fig. 6 gezeigten Ausführungsbeispiel umfaßt der Drehratensensor, der in Fig. 9 gezeigt ist, als seismische Masse die seismische Masse 20 und zwei weitere seismische Massen 21, die über Torsionsbalken mit der seismische Masse 20 verbunden ist. Wird die gesamte seismische Masse 20, 21 in eine Rotationsschwingung um den Aufhängungspunkt versetzt, und wirkt eine Drehrate auf den Sensor, die zumindest eine Komponente in einer Richtung aufweist, wie sie durch einen Pfeil 52 angedeutet ist, so führt die entstehende Corioliskraft zu einer Auslenkung der beiden weiteren seismischen Massen 21 senkrecht zur Zeichenebene. Im Sinne der vorliegenden Erfindung muß also nicht die gesamte seismische Masse, die angeregt wird, durch die Corioliskraft ausgelenkt werden. Es genügt auch, wenn ein Teil der seismischen Masse ausgelenkt wird, im Beispiel die weiteren seismischen Massen 21.

Die seismischen Massen 21 sind über den Erfassungselektroden 34a, 34b, die in Fig. 9 schematisch angedeutet sind, metallisiert, derart, daß über eine Kapazitätsveränderung zwischen den metallisierten seismischen Massen 21 und den darunterliegenden Elektroden 34a, 34b eine Kapazitätsänderung aufgezeichnet werden kann.

Bei dem in Fig. 9 gezeigten Ausführungsbeispiel führt somit nicht die Torsion der seismischen Masse 20 sondern die Verkippung der beiden weiteren seismischen Massen 21 zur Detektion der Drehrate. Dies hat bei Verwendung einer elektrostatischen Anregung den Vorteil, daß sich bei einer Verkippung der weiteren seismischen Massen 21 die Kapazität der Anregungsstrukturen nicht ändert. Dabei muß darauf geachtet werden, daß die Aufhängung 24 im Mittelpunkt so steif ist, daß die seismische Masse 20 nicht durch die Corioliskraft verkippt wird, sondern daß lediglich über die Torsionsbalken 25 die seismischen Massen 21 kippen. Somit kann die Anregungsschwingung von der Detektionsschwingung entkoppelt werden.

An dieser Stelle sei darauf hingewiesen, daß unter Umständen erforderliche Durchbrüche 21 sowohl für die seismische Masse 20 als auch für die äußeren Massen 21 aus Übersichtlichkeitsgründen nicht eingezeichnet sind. Sollte die laterale Ätzrate des verwendeten Prozesses nicht ausreichen, um die in Fig. 9 gezeichneten Strukturen der Strukturwaferanordnung zu ätzen, so müssen an entsprechenden Stellen die Durchbrüche 21 vorgesehen werden.

Fig. 10 zeigt eine Querschnittsansicht durch eine erfindungsgemäße Drehratensensorstruktur, die der Querschnittsansicht von Fig. 2 ähnelt, bei der jedoch ein Deckelwafer 54 vorhanden ist, der über eine weitere Verbindungsschicht 56 mit der Strukturwaferanordnung, beim Beispiel in Fig. 10 mit der oberen Metallisierung 18, verbunden ist. Fig. 10 zeigt somit eine Erweiterung der Waferstapelanordnung um den Deckelwafer 54, der vorprozessiert sein kann, um beispielsweise die in Fig. 10 dargestellte Ausnehmung 55 über der seismischen Masse 20a und der seismischen Masse 20b zu haben. Derselbe dient dazu, die Strukturwaferanordnung und darüber hinaus den gesamten Drehratensensor zu schützen und/oder die Kavität zwischen dem Deckelwafer 54 und dem Substratwafer zu evakuieren. Die Evakuierung hat den Vorteil, daß bewegliche Teile der Strukturwaferanordnung nicht durch einen Luftwiderstand beeinflußt werden. Alternativ könnte die Kavität mit einem bestimmten Fluid befüllt werden, um eine definierte Dämpfung der beweglichen Strukturen herzustellen.

Gegenüber bekannten mikromechanischen Drehratensensoren, die keine Waferstapelanordnung aufweisen, bietet das erfindungsgemäße Konzept der Waferstapelung zur Herstellung von mikromechanischen Drehratensensoren eine Fülle von Vorteilen, von denen nur einige im nachfolgenden genannt werden:

- Die Schicht- bzw. Waferstapelanordnung, sowie das Strukturieren der Drehratensensoren kann einfach, schnell und kostengünstig durchgeführt werden und ist für die Massenherstellung geeignet, so daß sich Wettbewerbsvorteile ergeben können.

- Für die Schichten bzw. Wafer können verschiedenste Materialien und Halbleitermaterialien benutzt werden, v. a. kann einkristallines Silizium für die Strukturschicht bzw. -wafer verwendet werden.

- Die Schicht- bzw. Waferverbindung, die gleichzeitig den Abstand der Substrat- und Strukturschichten bzw. -wafer definiert, kann mit großer Variationsmöglichkeit bezüglich der Dicke eingestellt werden, was bei einer kapazitiven Detektionseinheit vorteilhaft ist.

- Für die Schicht- bzw. Waferverbindung können verschiedene Polymere verwendet werden (Polyimide, Epoxidharze, Thermoplaste), oder andere organische Materialien, die in selektiven Ätzschritten, v. a. in einem Trockenätzprozess teilweise wieder entfernt werden können.

- Die mögliche Nutzung von Trockenätzprozessen führt zu keinem "Sticking", d. h. Kleben, der freigeätzten Strukturen am Substrat.

- Das Dünnen der großflächigen Strukturschicht bzw. -wafer führt zu einheitlichen Höhen der Strukturelemente und ermöglicht die abgleichfreie Herstellung von Drehratensensoren.

- Das Dünnen der Strukturschicht bzw. -wafer, und damit die Höheneinstellung der Struktur erfolgt durch einfache Verfahren, wie z. B. schleifen und polieren.

- Die Vorteile der Oberflächenmikromechaniktechnologien zur Strukturierung der Sensorstruktur können ohne Einschränkung genutzt werden.

- Die in Oberflächenmikromechanik hergestellten Drehratensensoren sind aufgrund ihrer kleinen Größe und aufgrund von möglichen hohen Balkenstrukturen robust gegenüber Schockbelastungen.

- Die Struktur kann in einem Ätzschritt definiert werden und besteht aus einem Teil.

- Die Höhe der Struktur kann mit großer Variationsmöglichkeit eingestellt werden.

- Durch die Einstellung der Höhe der Struktur sind verschiedene Auflösungsvermögen einstellbar.

- Durch große Höhen sind große Massen realisierbar und daher große Meßeffekte und Empfindlichkeiten erreichbar

- Durch große Höhen werden Störeffekte, wie z. B. Levitation, besser unterdrückt.

- Durch die große Höhe können Linearbeschleunigungen senkrecht zur Schicht- bzw. Waferstapelanordnung besser unterdrückt werden.

- Durch große Höhen sind großflächige Kapazitätsanordnungen zur Schwingungsanregung möglich und daher nur geringe Versorgungsspannungen nötig.

- Ein optimales Aspektverhältnis kann durch die große Variation der Höheneinstellung und Nutzung der Oberflächenmikromechaniktechnologien eingestellt werden, wodurch optimale Designfreiheit erreicht werden kann.

- Durch die große Designfreiheit können die Resonanzfrequenzen der beiden Schwingungen (Anregungs- und Detektionsschwingung) optimal aufeinander abgestimmt werden. Dies ist nötig, da die Anregung bei der Resonanzfrequenz erfolgen soll, damit eine große Auslenkung erreicht werden kann, und damit ein großer Meßeffekt.

- Das optimal einstellbare Aspektverhältnis der Struktur führt zu einer hohen Selektivität in den verschiedenen Schwingungsmoden.

- Da die Höhe der Struktur keinen Einfluß auf die Biegung von Biegebalken in der Schichtebene hat, aber einen linearen Einfluß auf die Torsion, können durch die Höheneinstellung die Resonanzfrequenzen von Torsionsbalken auf die der Biegebalken abgestimmt werden.

- Bei Verwendung von einkristallinem Silizium tauchen keine Alterungs- und Ermüdungserscheinungen des Materials auf.

- Bei Verwendung von einkristallinem Silizium tauchen keine Verspannungen der freigeätzten Sensorstruktur auf.

- Einkristallines Silizium hat optimale mechanische und elektrische Eigenschaften.

- Bei Verwendung von einkristallinem Silizium ist die monolithische Integration der Elektronik leicht möglich.

- Durch die Schicht- bzw. Waferstapelanordnung sind dreidimensionale Aufbauten des mechanischen Elementes, der Detektionseinheit und der Auswerteschaltung möglich.

- Durch das Herstellungsverfahren sind gute Reproduzierbarkeiten möglich und damit kostengünstige Drehratensensoren.

- Die Reihenfolge, zuerst die Schichten bzw. Wafer zu verbinden, und dann die Strukturschicht bzw. -wafer zu strukturieren führt zu keinem nötigen Abgleich der mechanischen Elemente bezüglich der Schwingeigenschaften.

- Das verwendete organische Material zur Schicht- bzw. Waferverbindung dient weiter als Ätzstopp, Opferschicht und Abstandsschicht um freistehende Strukturen zu erhalten.

- Es können unterschiedlichste Anregungs- und Detektionseinheiten benutzt werden.

- Bei Verwendung einer kapazitiven Detektionseinheit können die Elektroden auf den Substratwafer angebracht oder in demselben vergraben werden.

- Bei vergrabenen Elektroden erhält man eine plane Fläche für die Schicht- bzw. Waferverbindung.

- Als Elektroden können Metalle oder dotierte Bereiche in der Substratschicht verwendet werden.

- Die benötigte Auswerteschaltung kann monolithisch integriert werden oder durch hybride Integration realisiert werden.

- Bei einer kapazitiven Detektionseinheit mit Hybridintegration der Auswerteschaltung kann das nötige Bonden auf der unteren Elektrode durch eine Verbindung zur oberen Leitungsschicht auch auf der oberen Elektrode stattfinden.

- Durch das Strukturieren von Löchern oder Fenster in die Strukturschicht bzw. -wafer, und das anschließende Auffüllen mit leitendem Material wie Metall kann die Bondverbindung auf der Oberfläche der Strukturschicht erfolgen.

**Patentansprüche**

1. Mikromechanischer Drehratensensor mit Waferstapelanordnung, mit folgenden Merkmalen:

    einer Substratwaferanordnung (12, 16); und

    einer Strukturwaferanordnung (14, 18), in der wenigstens eine seismische Masse (20; 20a, 20b), deren Aufhängung (24) und mindestens eine Federeinrichtung (22a, 22b; 22c) zum Verbinden der Aufhängung (24) mit der seismischen Masse definiert sind;

    **gekennzeichnet durch**
    eine isolierende organische Verbindungsschicht (15), die die Substratwaferanordnung mit der Strukturwaferanordnung mechanisch verbindet, derart, daß die seismische Masse eine Anregungsschwingung und zumindest ein Teil der seismischen Masse eine Erfassungsschwingung aufgrund einer Drehrate relativ zu der Substratwaferanordnung (12, 16) ausführen kann.

2. Mikromechanischer Drehratensensor gemäß Anspruch 1, bei dem die Substratwaferanordnung (12, 16) einen Substratwafer (12) und eine Metallisierung (16) auf der der organischen Verbindungsschicht (15) zugewandten Seite des Substratwafers (12) aufweist, wobei die Metallisierung (16) flächige Erfassungselektroden (34a, 34b) unter der seismischen Masse (20; 20a, 20b) aufweist, um eine kapazitive Erfassungseinrichtung der Erfassungsschwingung aufgrund der Corioliskraft zu erhalten.

3. Mikromechanischer Drehratensensor gemäß Anspruch 1 oder 2, bei dem die Strukturwaferanordnung (14, 18) ferner eine Kammantriebseinrichtung (26, 28) zur Erzeugung einer Anregungsschwingung der seismischen Masse (20; 20a, 20b) aufweist, wobei ein feststehender Teil (26a, 28a) der Kammantriebseinrichtung eine Metallisierung (18) aufweist, durch die eine elektrische Spannung an die Kammantriebseinrichtung anlegbar ist.

4. Mikromechanischer Drehratensensor gemäß einem der vorhergehenden Ansprüche, bei dem die seismische Masse (20; 20a, 20b) Durchbrüche (21) aufweist, die derart angeordnet sind, daß die organische Verbindungsschicht (15) unter der seismischen Masse unter Verwendung einer lateralen Ätzung entfernt werden kann, derart, daß die seismische Masse die Anregungsschwingung und zumindest ein Teil der seismischen Masse die Erfassungsschwingung relativ zur Substratwaferanordnung (12, 16) ausführen kann.

5. Mikromechanischer Drehratensensor gemäß einem der vorhergehenden Ansprüche, bei dem die Substratwaferanordnung vergrabene Elektroden (35a, 35b) unter der seismischen Masse (20a, 20b) aufweist.

6. Mikromechanischer Drehratensensor gemäß einem der vorhergehenden Ansprüche, bei dem sowohl die Substratwaferanordnung als auch die Strukturwaferanordnung einen Halbleiterwafer (12, 14) aus einkristallinem Silizium aufweisen.

7. Mikromechanischer Drehratensensor gemäß einem der Ansprüche 3 bis 6, bei dem Abschnitte der Metallisierung (16) der Substratwaferanordnung und der Metallisierung (18) der Strukturwaferanordnung über eine Verbindungsmetallisierung (46) verbunden sind, derart, daß Anschlußflächen für den Drehratensensor auf einer gleichen Höhe bezüglich der Substratwaferanordnung (12, 16) sind.

8. Mikromechanischer Drehratensensor gemäß einem der vorhergehenden Ansprüche, bei dem die Dicke (d) der Strukturwaferanordnung (14, 18) höchstens das 50-fache der Dicke der organischen Verbindungsschicht (15) und vorzugsweise das 20- bis 30-fache beträgt.

9.  Mikromechanischer Drehratensensor gemäß einem der vorhergehenden Ansprüche, bei dem in der Strukturwaferanordnung eine Mehrzahl von seismischen Massen (20a, 20b) definiert ist.

10. Mikromechanischer Drehratensensor gemäß einem der vorhergehenden Ansprüche, der ferner folgendes Merkmal aufweist:

    eine in der Substratwaferanordnung monolithisch integrierte Anregungs- und Auswertungsschaltung (44).

11. Mikromechanischer Drehratensensor gemäß einem der vorhergehenden Ansprüche, bei dem die organische Verbindungsschicht (15) aus einem Polymer besteht.

12. Mikromechanischer Drehratensensor gemäß Anspruch 11, bei dem die organische Verbindungsschicht Polyimid, Epoxidharz oder Thermoplaste aufweist.

13. Mikromechanischer Drehratensensor gemäß einem der vorhergehenden Ansprüche, der ferner einen Deckelwafer (54) aufweist, der mit der Strukturwaferanordnung (14, 18) verbunden ist, derart, daß ein Hohlraum zwischen der Substratwaferanordnung (12, 16) und dem Deckelwafer (54) gebildet wird.

14. Verfahren zum Herstellen eines mikromechanischen Drehratensensors mit folgenden Schritten:

    a) Bereitstellen einer Substratwaferanordnung (12, 16);

    b) Bereitstellen einer Strukturwaferanordnung (14, 18);

    c) mechanisches Verbinden der Substratwaferanordnung und der Strukturwaferanordnung, um eine Waferstapelanordnung zu erhalten; und

    d) Strukturieren der Strukturwaferanordnung der Waferstapelanordnung, um wenigstens eine seismische Masse (20; 20a, 20b), eine Aufhängung (24) und eine Federeinrichtung (22a, 22b; 22c) zum Verbinden der Aufhängung (24) mit der seismischen Masse (20; 20a, 20b) zu definieren

    **dadurch gekennzeichnet,**

    **daß** das mechanische Verbinden der Substratwaferanordnung und der Strukturwaferanordnung mittels einer isolierenden organischen Verbindungsschicht (15) durchgeführt wird; und

die organische Verbindungsschicht (15) zumindest unter der seismischen Masse derart entfernt wird, daß die seismische Masse eine Anregungsschwingung und zumindest ein Teil derselben eine Erfassungsschwingung aufgrund einer Drehrate relativ zur Substratwaferanordnung ausführen kann.

15. Verfahren gemäß Anspruch 14, bei dem der Schritt a) folgende Teilschritte aufweist:

    Bereitstellen eines Halbleiterwafers (12);

    Metallisieren (16) des Halbleiterwafers (12); und

    Strukturieren der Metallisierung (16), um zumindest eine Elektrode (34a, 34b) zu bilden, die unter der seismischen Masse (20; 20a, 20b) plaziert ist, um die Substratwaferanordnung (12, 16) zu erhalten.

16. Verfahren gemäß Anspruch 14, bei dem der Schritt a) folgende Teilschritte aufweist:

    Bereitstellen eines Halbleiterwafers (12);

    Bilden einer vergrabenen Elektrode (35a, 35b) in dem Halbleiterwafer (12), die unter der seismischen Masse (20; 20a, 20b) plaziert ist, um die Substratwaferanordnung zu erhalten.

17. Verfahren gemäß einem der Ansprüche 14 bis 16, bei dem der Schritt d) durch Trockenätzen der Strukturwaferanordnung ausgeführt wird, wobei die organische Verbindungsschicht (15) als Ätzstopp wirkt.

18. Verfahren gemäß einem der Ansprüche 14 bis 17, bei dem der Schritt e) durch Trockenätzen ausgeführt wird, wodurch lediglich die organische Verbindungsschicht selektiv geätzt wird.

19. Verfahren gemäß Anspruch 18, bei dem im Schritt d) eine Mehrzahl von Durchbrüchen (21) in die seismische Masse (20a, 20b) strukturiert wird, und bei dem im Schritt e) die organische Verbindungsschicht (15) in den Durchbrüchen und lateral unter den Durchbrüchen weggeätzt wird.

20. Verfahren gemäß einem der Ansprüche 14 bis 19, das vor dem Schritt b) ferner folgenden Schritt aufweist:
    Dünnen der Strukturwaferanordnung (14) auf eine vorbestimmte Dicke (d), um zusammen mit der lateralen Ausdehnung der in dem Schritt d) definierten Elemente eine Federkonstante der Federeinrichtung und die Masse der seismischen Masse festzulegen.

21. Verfahren gemäß einem der Ansprüche 14 bis 20, das ferner vor dem Schritt a) folgenden Schritt aufweist:

monolithisches Integrieren einer Anregung- und Auswertungsschaltung (44) für den mikromechanischen Drehratensensor in den Substratwafer (12) der Substratwaferanordnung (12, 16).

## Claims

1. A micromechanical rotation rate sensor provided with a wafer stack arrangement, comprising:

   a substrate wafer arrangement (12, 16);

   a structural wafer arrangement (14, 18) in which there are defined at least one seismic mass (20; 20a; 20b), the suspension (24) of said seismic mass and at least one spring means (22a, 22b; 22c) for connecting the suspension (24) to said seismic mass;

   **characterized by**
   an insulating organic connecting layer (15) which mechanically connects the substrate wafer arrangement to the structural wafer arrangement in such a way that the seismic mass can carry out an excitation oscillation and that at least part of the seismic mass can carry out a detection oscillation on the basis of a rotation rate relative to the substrate wafer arrangement (12, 16).

2. A micromechanical rotation rate sensor according to claim 1, wherein the substrate wafer arrangement (12, 16) includes a substrate wafer (12) and a metallization (16) on the substrate-wafer side facing the organic connecting layer (15), the metallization (16) having planar detection electrodes (34a, 34b) below the seismic mass (20; 20a, 20b) so as to obtain a capacitive detection means of the detection oscillation on the basis of the Coriolis force.

3. A micromechanical rotation rate sensor according to claim 1 or 2, wherein the structural wafer arrangement (14, 18) additionally includes a comb drive means (26, 28) for producing an excitation oscillation of the seismic mass (20; 20a; 20b), a stationary portion (26a, 28a) of the comb drive means having a metallization (18) through which an electric voltage can be applied to the comb drive means.

4. A micromechanical rotation rate sensor according to one of the preceding claims, wherein the seismic mass (20; 20a, 20b) is provided with through holes (21) which are arranged in such a way that, making use of lateral etching, the organic connecting layer (15) below the seismic mass can be removed in such a way that the seismic mass can carry out the excitation oscillation and that at least part of the seismic mass can carry out the detection oscillation relative to the substrate wafer arrangement (12, 16).

5. A micromechanical rotation rate sensor according to one of the preceding claims, wherein the substrate wafer arrangement includes buried electrodes (35a, 35b) below the seismic mass (20a, 20b).

6. A micromechanical rotation rate sensor according to one of the preceding claims, wherein both the substrate wafer arrangement and the structural wafer arrangement may be provided with a semiconductor wafer (12, 14) consisting of monocrystalline silicon.

7. A micromechanical rotation rate sensor according to one of the claims 3 to 6, wherein portions of the metallization (16) of the substrate wafer arrangement and of the metallization (18) of the structural wafer arrangement are connected via a connection metallization (46) in such a way that connecting areas for the rotation rate sensor are located on the same level relative to the substrate wafer arrangement (12, 16).

8. A micromechanical rotation rate sensor according to one of the preceding claims, wherein the thickness (d) of the substrate wafer arrangement (14, 18) is at most 50 times, and preferably 20 to 30 times as thick as the thickness of the organic connecting layer (15).

9. A micromechanical rotation rate sensor according to one of the preceding claims, wherein a plurality of seismic masses (20a, 20b) is defined in the structural wafer arrangement.

10. A micromechanical rotation rate sensor according to one of the preceding claims, comprising in addition:
    an excitation and evaluation circuit (44) which is monolithically integrated in the substrate wafer arrangement.

11. A micromechanical rotation rate sensor according to one of the preceding claims, wherein the organic connecting layer (15) consists of a polymer.

**12.** A micromechanical rotation rate sensor according to claim 11, wherein the organic connecting layer comprises polyimide, epoxy resin or thermoplastic materials.

**13.** A micromechanical rotation rate sensor according to one of the preceding claims, comprising in addition a cover wafer (54) which is connected to the structural wafer arrangement (14, 18) in such a way that a cavity is formed between the substrate wafer arrangement (12, 16) and said cover wafer (54).

**14.** A method for producing a micromechanical rotation rate sensor comprising the following steps:

a) providing a substrate wafer arrangement (12; 16);

b) providing a structural wafer arrangement (14, 18);

c) mechanically connecting the substrate wafer arrangement and the structural wafer arrangement so as to obtain a wafer stack arrangement; and

d) structuring the structural wafer arrangement of the wafer stack arrangement so as to define at least one seismic mass (20; 20a, 20b), a suspension (24) and a spring means (22a, 22b; 22c) for connecting the suspension (24) to the seismic mass (20; 20a; 20b),
**characterized in that**
the mechanically connecting of the substrate wafer arrangement and the structural wafer arrangement is performed by means of an insulating organic connecting layer (15); and

e) the organic connecting layer (15) is removed at least below the seismic mass in such a way that the seismic mass can carry out an excitation oscillation and that at least part of the seismic mass can carry out a detection oscillation on the basis of a rotation rate relative to the substrate wafer arrangement.

**15.** A method according to claim 14, wherein step a) comprises the following substeps:

providing a semiconductor waver (12);

metallizing (16) the semiconductor wafer (12); and

structuring the metallization (16) so as to form at least one electrode (34a, 34b) which is placed below the seismic mass (20; 20a, 20b) so as to obtain the substrate wafer arrangement (12, 16).

**16.** A method according to claim 14, wherein step a) comprises the following substeps:

providing a semiconductor wafer (12);

forming in the semiconductor wafer (12) a buried electrode (35a, 35b), which is placed below the seismic mass (20; 20a, 20b), so as to obtain the substrate wafer arrangement.

**17.** A method according to one of the claims 14 to 16, wherein step d) is carried out by dry-etching the structural wafer arrangement, the organic connecting layer (15) acting as an etch stop.

**18.** A method according to one of the claims 14 to 17, wherein step e) is carried out by dry-etching, only the organic connecting layer being selectively etched in said dry-etching step.

**19.** A method according to claim 18, wherein in step d) a plurality of through holes (21) is formed in the seismic mass (20a, 20b) by structuring, and wherein in step e) the organic connecting layer (15) is etched away in the through holes and laterally below the through holes.

**20.** A method according to one of the claims 14 to 19, comprising the following additional step which is carried out prior to step b):
thinning the structural wafer arrangement (14) to a predetermined thickness (d) so as to determine together with the lateral dimensions of the elements defined in step d) a spring constant of the spring means and the mass of the seismic mass.

**21.** A method according to one of the claims 14 to 20, comprising the following additional step which is carried out prior to step a):
monolithically integrating an excitation and evaluation circuit (44) for the micromechanical rotation rate sensor in the substrate wafer (12) of the substrate wafer arrangement (12, 16).

**Revendications**

**1.** Détecteur de vitesse de rotation micromécanique à empilement de plaquettes, aux caractéristiques suivantes :

un aménagement de plaquettes de substrat (12, 16) ; et
un aménagement de plaquettes de structure (14, 18) dans lequel sont définis au moins une masse sismique (20 ; 20a, 20b), sa suspension (24) et au moins un dispositif à effet de ressort (22a, 22b ; 22c) destiné à relier la suspension (24) à la masse sismique;

**caractérisé par**
une couche de liaison organique isolante (15) reliant mécaniquement l'aménagement de plaquettes de substrat à l'aménagement de plaquettes de structure, de sorte que la masse sismique puisse effectuer une oscillation d'activation et qu'au moins une partie de la masse de la masse sismique puisse effectuer une oscillation de détection sur base d'une vitesse de rotation par rapport à l'aménagement de plaquettes de substrat (12, 16).

**2.** Détecteur de vitesse de rotation micromécanique selon la revendication 1, dans lequel l'aménagement de plaquettes de substrat (12, 16) présente une plaquette de substrat (12) et une métallisation (16) du côté de la plaquette de substrat (12) orienté vers la couche de connexion organique (15), la métallisation (16) présentant des électrodes de détection planes (34a, 34b) sous la masse sismique (20 ; 20a, 20b), pour obtenir un dispositif de détection capacitive de l'oscillation de détection sur base de la force de Coriolis.

**3.** Détecteur de vitesse de rotation micromécanique selon la revendication 1 ou 2, dans lequel l'aménagement de plaquettes de structure (14, 18) présente, par ailleurs, un dispositif d'entraînement en forme de peigne (26, 28) destiné à générer une oscillation d'activation de la masse sismique (20 ; 20a, 20b), une partie fixe (26a, 28a) du dispositif d'entraînement en forme de peigne présentant une métallisation (18) par laquelle peut être appliquée une tension électrique sur le dispositif d'entraînement en forme de peigne.

**4.** Détecteur de vitesse de rotation micromécanique selon l'une des revendications précédentes, dans lequel la masse sismique (20 ; 20a, 20b) présente des passages (21) disposés de telle sorte que la couche de liaison organique (15) sous la masse sismique puisse être éliminée à l'aide d'une gravure latérale, de sorte que la masse sismique puisse effectuer l'oscillation d'activation et qu'au moins une partie de la masse sismique puisse effectuer l'oscillation de détection par rapport à l'aménagement de plaquettes de substrat (12, 16).

**5.** Détecteur de vitesse de rotation micromécanique selon l'une des revendications précédentes, dans lequel l'aménagement de plaquettes de substrat présente des électrodes enterrées (35a, 35b) sous la masse sismique (20a, 20b).

**6.** Détecteur de vitesse de rotation micromécanique selon l'une des revendications précédentes, dans lequel tant l'aménagement de plaquettes de substrat que l'aménagement de plaquettes de structure présente une plaquette à semi-conducteur (12, 14) en silicium monocristallin.

**7.** Détecteur de vitesse de rotation micromécanique selon l'une des revendications 3 à 6, dans lequel des segments de la métallisation (16) de l'aménagement de plaquettes de substrat et de la métallisation (18) de l'aménagement de plaquettes de structure sont reliées par l'intermédiaire d'une métallisation de liaison (46), de sorte que les faces de connexion du détecteur de vitesse de rotation se situent à une même hauteur par rapport à l'aménagement de plaquettes de substrat (12, 16).

**8.** Détecteur de vitesse de rotation micromécanique selon l'une des revendications précédentes, dans lequel l'épaisseur (d) de l'aménagement de plaquettes de structure (14, 18) est de maximum 50 fois l'épaisseur de la couche de connexion organique (15) et, de préférence, de 20 à 30 fois cette dernière.

**9.** Détecteur de vitesse de rotation micromécanique selon l'une des revendications précédentes, dans lequel il est défini, dans l'aménagement de plaquettes de structure, une pluralité de masses sismiques (20a, 20b).

**10.** Détecteur de vitesse de rotation micromécanique selon l'une des revendications précédentes, présentant, par ailleurs, la caractéristique suivante :
un circuit d'activation et d'évaluation (44) intégré de manière monolithique dans l'aménagement de plaquettes de substrat.

**11.** Détecteur de vitesse de rotation micromécanique selon l'une des revendications précédentes, dans lequel la couche de liaison organique (15) est réalisée en un polymère.

**12.** Détecteur de vitesse de rotation micromécanique selon la revendication 11, dans lequel la couche de liaison organique présente du polyimide, de la résine époxyde ou des matières thermoplastiques.

**13.** Détecteur de vitesse de rotation micromécanique selon l'une des revendications précédentes, présentant, par ailleurs, une plaquette de couvercle (54) reliée à l'aménagement de plaquettes de structure (14, 18), de sorte qu'il soit formé un espace creux entre l'aménagement de plaquettes de substrat (12, 16) et la plaquette de couvercle (54).

**14.** Procédé de production d'un détecteur de vitesse de rotation micromécanique, aux étapes suivantes consistant à :

a) préparer un aménagement de plaquettes de substrat (12, 16) ;

b) préparer un aménagement de plaquettes de structure (14, 18) ;

c) relier mécaniquement l'aménagement de plaquettes de substrat et l'aménagement de plaquettes de structure, pour obtenir un aménagement à empilement de plaquettes ; et

d) structurer l'aménagement de plaquettes de structure de l'aménagement à empilement de plaquettes, pour définir au moins une masse sismique (20, 20a, 20b), une suspension (24) et un dispositif à effet de ressort (222, 22b ; 22c) destiné à relier la suspension (24) à la masse sismique (20, 20a, 20b),

**caractérisé par le fait**

**que** la liaison mécanique de l'aménagement de plaquettes de substrat et l'aménagement de plaquettes de structure est réalisée à l'aide d'une couche de liaison organique isolante (15) ; et

e) que la couche de liaison organique isolante (15) est éliminée au moins sous la masse sismique de telle sorte que la masse sismique puisse effectuer une oscillation d'activation et qu'au moins une partie de celle-ci puisse effectuer une oscillation de détection sur base d'une vitesse de rotation par rapport à l'aménagement de plaquettes de substrat.

15. Procédé selon la revendication 14, dans lequel l'étape a) présente les étapes partielles suivantes consistant à :

préparer une plaquette à semi-conducteur (12) ;

métalliser (16) la plaquette à semi-conducteur (12) ; et

structurer la métallisation (16), pour former au moins une électrode (34a, 34b) placée sous la masse sismique (20, 20a, 20b), afin d'obtenir l'aménagement de plaquettes de substrat (12, 16).

16. Procédé selon la revendication 14, dans lequel l'étape a) présente les étapes partielles suivantes consistant à :

préparer une plaquette à semi-conducteur (12) ;

former une électrode enterrée (35a, 35b) dans la plaquette à semi-conducteur (12), laquelle est placée sous la masse sismique (20, 20a, 20b), pour obtenir l'aménagement de plaquettes de substrat.

17. Procédé selon l'une des revendications 14 à 16, dans lequel l'étape d) est réalisée par gravure en sec de l'aménagement de plaquettes de structure, la couche de liaison organique isolante (15) agissant comme arrêt de gravure.

18. Procédé selon l'une des revendications 14 à 17, dans lequel l'étape e) est réalisée par gravure en sec, seule la couche de liaison organique étant décapée sélectivement.

19. Procédé selon la revendication 18, dans lequel, à l'étape d), il est structuré une pluralité de passages (21) dans la masse sismique (20a, 20b) et dans lequel, à l'étape e), la couche de liaison organique (15) est éliminée par gravure dans les passages et latéralement sous les passages.

20. Dispositif selon l'une des revendications 14 à 19, présentant, avant l'étape b), par ailleurs, l'étape suivante consistant à :

amincir l'aménagement de plaquettes de structure (14) à une épaisseur prédéterminée (d), pour définir, ensemble avec l'allongement latéral des éléments définis à l'étape d), une constante de ressort du dispositif à effet de ressort et la masse de la masse sismique.

21. Dispositif selon l'une des revendications 14 à 20, présentant, par ailleurs, avant l'étape a), l'étape suivante consistant à :

intégrer de manière monolithique un circuit d'activation et d'évaluation (44) du détecteur de vitesse de rotation micromécanique dans la plaquette de substrat (12) de l'aménagement de plaquettes de substrat (12, 16).

FIG.1

**FIG.2**

**FIG.3**

FIG.4

FIG.5

FIG.6

FIG.7

FIG.8

FIG.9

FIG.10